# EUROPEAN PATENT APPLICATION

(11) **EP 4 563 442 A1**
(43) Date of publication of application: **04.06.2025**
(21) Application number: 24216409.3
(22) Date of filing: 29.11.2024
(51) Int. Cl.: B62B 7/14

(54) **ADAPTOR, ADAPTOR APPARATUS, AND CHILD CARRIER**

(30) Priority: 30.11.2023 CN 202311628035
(71) Applicant: Wonderland Switzerland AG, 6312 Steinhausen (CH)
(72) Inventor: Wu, Haitao, Dongguan, Guangdong, 523648 (CN)
(74) Representative: Lucke, Andreas

(57) **Abstract**

An adaptor (3) for a child carrier including a carrier body (2) and a frame body (1) is disclosed. The adaptor includes: a connecting base (31), a locking member (32), an operating member (33), and a traction assembly (34). The connecting base has a first connecting portion (311) and a second connecting portion (312). The first connecting portion (311) is adapted to be connected to the carrier body (2). The locking member (32) is movably arranged on the second connecting portion (312) and has a lock position and an unlock position. When the locking member (32) is at the lock position, the locking member (32) locks a fitting member (41) arranged on the frame body (1) to connect the adaptor (3) to the frame body (1), and when the locking member (32) is at the unlock position, the locking member (32) unlocks the fitting member (41) to allow the adaptor (3) to be separated from the frame body (1).

## Description

### TECHNICAL FIELD

The present disclosure relates to the field of child appliance technologies, and in particular, to an adaptor, an adaptor apparatus, and a child carrier.

### BACKGROUND

An adaptor can be used to detachably mount a baby carrier, such as a baby seat or a carry cot, on a baby stroller. Conventional adaptors generally have complex structures and are inconvenient to operate.

### SUMMARY

The present disclosure provides an adaptor, an adaptor apparatus, and a child carrier, which are easy to operate and have a small space.

According to an aspect of the present disclosure, an adaptor is provided. The adaptor is used for a child carrier including a carrier body and a frame body. The adaptor includes a connecting base, a locking member, an operating member, and a traction assembly. The connecting base has a first connecting portion and a second connecting portion, the first connecting portion being adapted to be connected to the carrier body. The locking member is movably arranged on the second connecting portion of the connecting base and has a lock position and an unlock position, when the locking member is at the lock position, the locking member is configured to lock a fitting member arranged on the frame body to connect the adaptor to the frame body, and when the locking member is at the unlock position, the locking member is configured to unlock the fitting member to allow the adaptor to be separated from the frame body. The operating member is movably arranged on the connecting base. The traction assembly is connected to the locking member and the operating member respectively. The operating member is operable to drive the traction assembly to drive the locking member to move from the lock position to the unlock position.

In an embodiment, the fitting member is a clamping rod, and the locking member is rotatably arranged on the second connecting portion and has a hook portion, the hook portion being configured to be engaged with the fitting member.

In an embodiment, the second connecting portion is provided with an engaging groove, the engaging groove being configured to be engaged with a side wall of a fitting base arranged on the frame body.

In an embodiment, the second connecting portion is provided with a locking groove. When the locking member is at the lock position, the locking member at least partially extends into the locking groove and locks the fitting member, so as to limit the fitting member within the locking groove. When the locking member is at the unlock position, the locking member exits the locking groove, thereby allowing the fitting member to be separated from the connecting base.

In an embodiment, the adaptor further includes a reset member, the reset member being connected to the locking member, and the reset member being adapted to bias the locking member to move the locking member towards the lock position.

In an embodiment, the traction assembly includes: a traction member and a sheath. One end of the traction member is connected to the locking member, and the other end of the traction member is connected to the operating member. The sheath sleeves the traction member.

In an embodiment, the connecting base includes a first housing and a second housing, the first housing being provided with an accommodating groove, the second housing covering a groove opening of the accommodating groove, at least part of the operating member is accommodated in the accommodating groove, and the traction assembly is accommodated in the accommodating groove; and

The locking member has a pivot portion, the pivot portion being rotatably arranged in the accommodating groove, and when the locking member is at the lock position, at least part of the hook portion is capable of extending out of the accommodating groove.

In an embodiment, a side wall of the accommodating groove is provided with an operating port, the operating port being in communication with the accommodating groove, and the operating member is movably inserted into the operating port and has a first position and a second position. The operating member has an operating portion, and when the operating member is at the first position, at least part of the operating portion extends out of the accommodating groove.

In an embodiment, the traction assembly includes a traction member, the traction member including a first end, a second end, and a middle part between the first end and the second end, the first end being connected to the locking member, and the second end being connected to the operating member. The connecting base is provided with a protruding portion, and the middle part abuts against the protruding portion. The operating member is movably arranged on the connecting base, and when the operating member moves from the first position to the second position, a distance between the first end and the second end decreases.

In an embodiment, the second housing is provided with an operating port, the operating port being in communication with the accommodating groove. The operating member includes a main body portion and an operating portion, the main body portion being movably arranged in the accommodating groove, and the operating member at least partially extends out of the accommodating groove through the operating port.

According to another aspect of the present disclosure, an adaptor apparatus is provided. The adaptor apparatus includes a fitting assembly and the adaptor in any one of the above embodiments. The fitting assembly is configured to be connected to a frame body of a child carrier, the fitting assembly includes a fitting base and a fitting member arranged on the fitting base, and the fitting assembly has a receiving groove and is provided with the fitting member. The connecting base of the adaptor is adapted to be at least partially inserted into the receiving groove, and the locking member selectively locks the fitting member.

In an embodiment, the fitting member is a clamping rod, two ends of the clamping rod being connected to a pair of side walls of the receiving groove respectively.

In an embodiment, the second connecting portion of the connecting base is provided with an engaging groove, and at least part of the second connecting portion is inserted into the receiving groove, the engaging groove being engaged with a side wall of the receiving groove.

According to yet another aspect of the present disclosure, a child carrier is provided. The child carrier includes a frame body, a carrier body, and the adaptor apparatus in any one of the above embodiments. The fitting assembly of the adaptor apparatus is connected to the frame body, and the adaptor of the adaptor apparatus is detachably connected to the fitting assembly and the carrier body.

In an embodiment, the frame body includes a wheel frame and a seat frame connected to the wheel frame. Two adaptor apparatuses are provided, and each fitting assembly is connected to the wheel frame and the seat frame respectively.

### BRIEF DESCRIPTION OF THE DRAWINGS

The accompanying drawings forming part of the present disclosure are intended to provide further understanding of the present disclosure. Exemplary embodiments of the present disclosure and descriptions thereof are intended to explain the present disclosure, and do not constitute any inappropriate limitation on the present disclosure.

In order to more clearly illustrate the technical solutions in embodiments of the present disclosure, the accompanying drawings used in the description of the embodiments will be briefly introduced below. It is apparent that, the accompanying drawings in the following description are only some embodiments of the present disclosure, and other drawings can be obtained by those of ordinary skill in the art from the provided drawings without creative efforts.

In addition, the accompanying drawings are not drawn to 1: 1 scale, and relative sizes of various elements in the accompanying drawings are drawn by way of examples only to facilitate understanding of the present disclosure, and not necessarily to true scale. In the drawings;
FIG. 1 is a perspective view of a child carrier according to some embodiments of the present disclosure;
FIG. 2 is a perspective view of the child carrier in FIG. 1 after a carrier body is removed;
FIG. 3 is a perspective view of the child carrier in FIG. 1 after the carrier body and an adaptor are removed;
FIG. 4 is a schematic exploded view of an adaptor apparatus of the child carrier in FIG. 1;
FIG. 5 is an enlarged view of a portion A in FIG. 4;
FIG. 6 is a left view of the adaptor according to some embodiments of the present disclosure;
FIG. 7 is a right view of the adaptor in FIG. 6;
FIG. 8 is a right view of the adaptor in FIG. 7 after a second housing is removed, with a locking member being at a lock position;
FIG. 9 is a right view of the adaptor in FIG. 7 after the second housing is removed, with the locking member being at an unlock position;
FIG. 10 is a perspective view of the adaptor in FIG. 6 after a connecting base is removed;
FIG. 11 is a right view of the adaptor according to some other embodiments of the present disclosure;
FIG. 12 is a right view of the adaptor in FIG. 11 after the second housing is removed, with the locking member being at the lock position; and
FIG. 13 is a perspective view of the adaptor in FIG. 11 after the connecting base is removed.

### DETAILED DESCRIPTION

In order to make the above objectives, features, and advantages of the present disclosure more obvious and understandable, specific implementations of the present disclosure are described in detail below with reference to the accompanying drawings. In the following description, many specific details are set forth in order to fully understand the present disclosure. However, the present disclosure can be implemented in many other ways different from those described herein, and those skilled in the art can make similar improvements without departing from the connotation of the present disclosure. Therefore, the present disclosure is not limited by the specific embodiments disclosed below.

In the description of the present disclosure, it should be understood that the orientation or position relationships indicated by the terms "central", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", and the like are based on the orientation or position relationships shown in the accompanying drawings and are intended to facilitate the description of the present disclosure and simplify the description only, rather than indicating or implying that the apparatus or element referred to must have a particular orientation or be constructed and operated in a particular orientation, and therefore are not to be interpreted as limiting the present disclosure.

In addition, the terms "first" and "second" are used for descriptive purposes only, which cannot be construed as indicating or implying a relative importance, or implicitly specifying the number of the indicated technical features. Therefore, the features defined with "first" and "second" may explicitly or implicitly include at least one feature. In the description of the present disclosure, "a plurality of" means at least two, such as two or three, unless otherwise defined explicitly and specifically.

In the present disclosure, unless otherwise specified and defined explicitly, the terms "mount", "connect", "join", and "fix" should be understood in a broad sense, which may be, for example, a fixed connection, a detachable connection, or an integral connection; a mechanical connection or an electrical connection; or a direct connection, an indirect connection via an intermediate medium, an internal connection between two elements, or interaction between two elements. Those of ordinary skill in the art can understand specific meanings of these terms in the present disclosure according to specific situations.

In the present disclosure, unless otherwise explicitly specified and defined, the expression a first feature being "on" or "under" a second feature may be the case that the first feature is in direct contact with the second feature, or the first feature is in indirect contact with the second feature via an intermediate medium. Furthermore, the expression the first feature being "over", "above" and "on top of" the second feature may be the case that the first feature is directly above or obliquely above the second feature, or only means that the level of the first feature is higher than that of the second feature. The expression the first feature being "below", "underneath" or "under" the second feature may be the case that the first feature is directly underneath or obliquely underneath the second feature, or only means that the level of the first feature is lower than that of the second feature.

It should be noted that when one element is referred to as being "fixed to" or "arranged on" another element, it may be directly disposed on the another element or an intermediate element may exist. When one element is considered to be "connected to" another element, it may be directly connected to the another element or an intermediate element may co-exist. The terms "vertical", "horizontal", "left", "right" and similar expressions used herein are for illustrative purposes only and do not represent an only implementation.

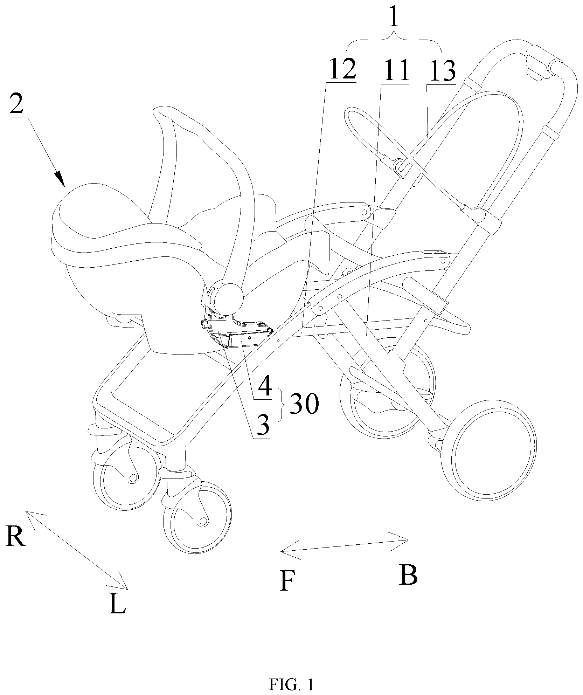

The present disclosure provides an adaptor 3, an adaptor apparatus 30, and a child carrier provided with the adaptor apparatus 30. Referring to FIG. 1, FIG. 1 is a perspective view of a child carrier according to some embodiments of the present disclosure. The child carrier includes a frame body 1, a carrier body 2, and an adaptor apparatus 30. The carrier body 2 is detachably connected to the frame body 1 through the adaptor apparatus 30. The child carrier is, for example, a child stroller. The child stroller may be a single stroller, a double stroller, or the like. The carrier body may be, for example, a carry cot, a stroller seat, or the like. The adaptor apparatus 30 includes an adaptor 3 and a fitting assembly 4. The adaptor 3 is detachably connected to the fitting assembly 4. The adaptor 3 and the adaptor apparatus 30 are described together below when the child carrier is described.

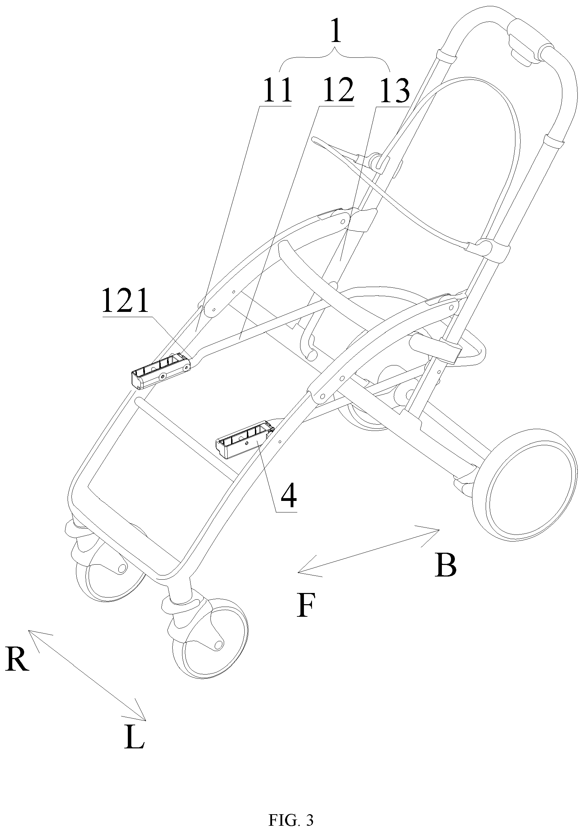

As shown in FIG. 1 to FIG. 3, the frame body 1 includes a wheel frame 11, a push handle 13, and a seat frame 12 connected to the wheel frame 11 and the push handle 13. In some embodiments, in addition to the carrier body 2, the seat frame 12 may be further provided with another stroller seat, so that the child carrier can accommodate two children (including infants and toddlers) at the same time. Certainly, in some other embodiments, the child carrier may alternatively be provided only with the carrier body 2. By replacing different types of carrier bodies 2, the child carrier can meet requirements of children of different ages and sizes in different scenarios. Referring to FIG. 1 to FIG. 3, the seat frame 12 is substantially U-shaped, and the seat frame 12 has two free end portions 121. When the child carrier is in an unfolded state, the two free end portions 121 respectively extend in a direction away from the push handle 13 (that is, forward in a front-rear direction). The two free end portions 121 are each provided with the fitting assembly 4. The two fitting assemblies 4 are respectively fixedly connected or detachably connected to the wheel frame 11. The adaptor 3 is connected to the carrier body 2 and the fitting assembly 4 respectively, to detachably connect the carrier body 2 to the frame body 1. That is, the carrier body 2 is respectively connected to the two free end portions 121 of the seat frame 12 through two adaptor apparatuses 30. In other embodiments not illustrated, when the carrier body 2 is a stroller seat, the stroller seat may also be directly connected to the fitting assembly 4, which is not limited in the present disclosure.

It should be noted that, unless otherwise explicitly specified and defined, in various embodiments of the present disclosure, orientation terms related to the child carrier such as "front", "rear", "upper", "lower", "left", and "right" are based on "front", "back", "upper", "lower", "left", and "right" orientations of the child carrier traveling normally. In the figure, arrows L and R schematically show "left" and "right" directions, and arrows F and B schematically show "front" and "rear" directions. These orientation terms are intended only to make the description of the embodiments of the present disclosure clearer and are not intended to unduly limit the protection scope of the present disclosure.

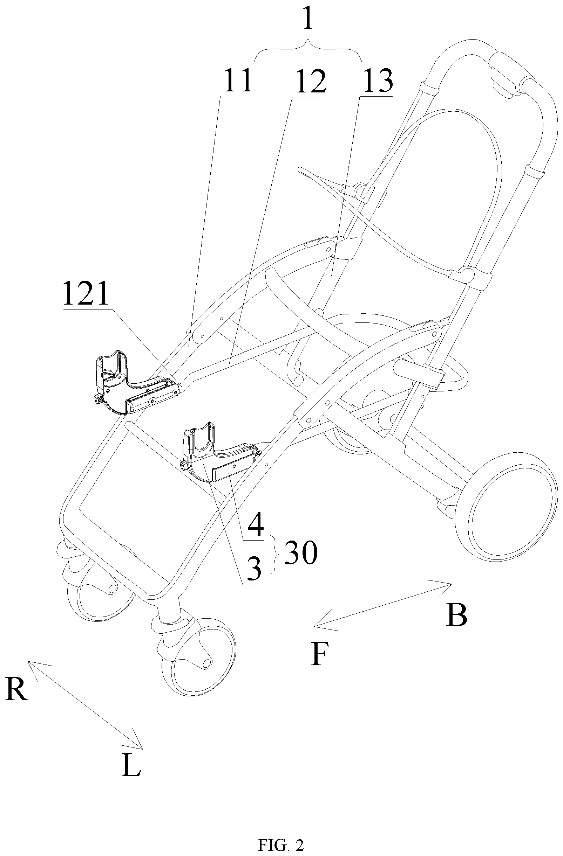

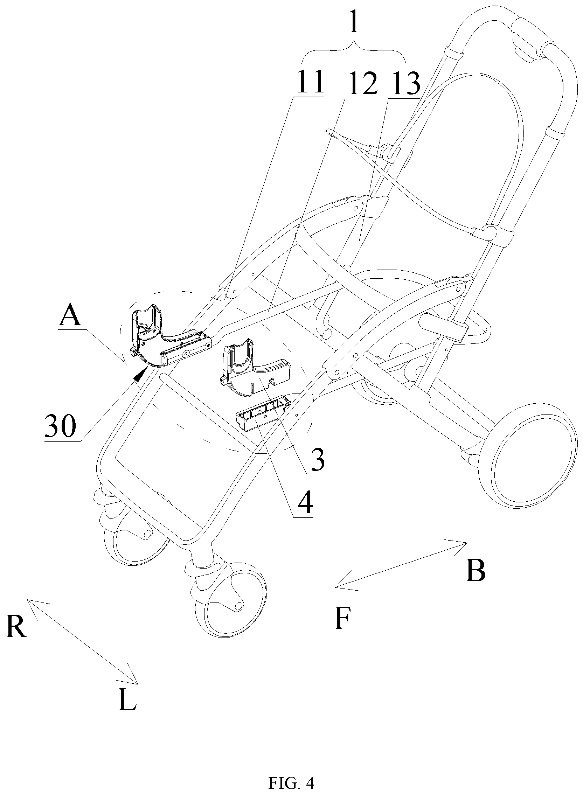

As shown in FIG. 2 and FIG. 4, the two adaptor apparatuses 30 are symmetrically arranged on the frame body 1, and structures of the two adaptor apparatuses 30 are mirrored symmetrically in a left-right direction. For ease of description, the adaptor apparatus 30 provided on the left side of the frame body 1 is used as an example for description.

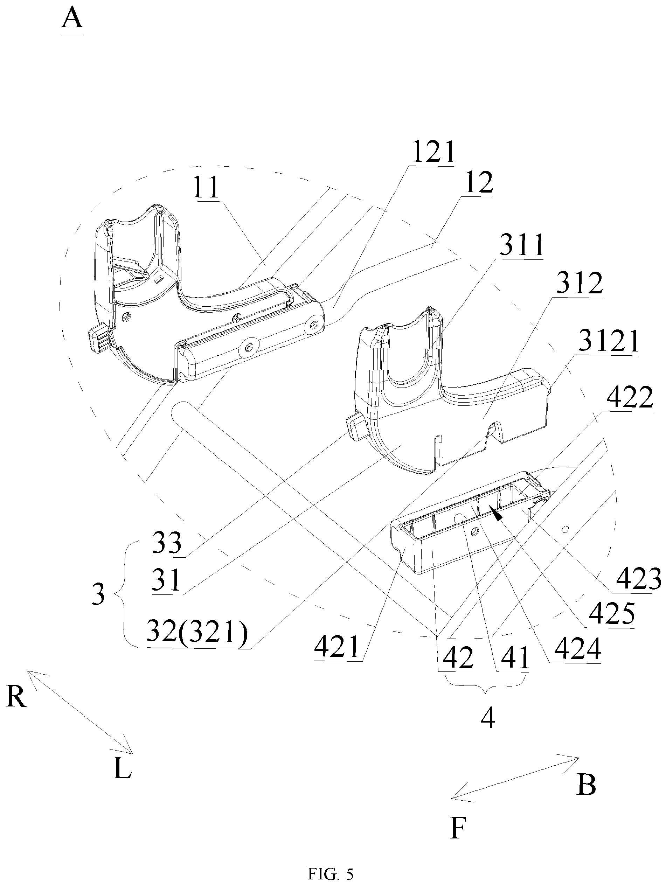

Referring to FIG. 4 and FIG. 5, the fitting assembly 4 includes a fitting base 42 and a fitting member 41 arranged on the fitting base 42. The fitting base 42 is substantially cuboid. The fitting base 42 has a receiving groove 425. The receiving groove 425 has a front side wall 421 and a rear side wall 422 that are substantially located in the front-rear direction, and a left side wall 423 and a right side wall 424 that are substantially located in the left-right direction. The rear side wall 422 is connected to the free end portion 121 of the seat frame 12 and is detachably connected to the wheel frame 11 through a connecting member (such as a screw, a bolt, or a rivet). In this embodiment, at least part of the fitting member 41 is accommodated in the receiving groove 425. Specifically, the fitting member 41 is, for example, a clamping rod, and two ends of the clamping rod are connected to a pair of side walls of the receiving groove 425 respectively. More specifically, one end of the clamping rod is connected to the left side wall 423, the other end of the clamping rod is connected to the right side wall 424, and the fitting member 41 extends substantially along the left-right direction. Certainly, in some other embodiments not illustrated, the fitting member 41 may be located outside the receiving groove 425 of the fitting base 42. In some other embodiments not illustrated, the fitting base 42 may not be provided, and the fitting member 41 is directly arranged on the frame body 1 (e.g., the seat frame 12), which is not limited in the present disclosure.

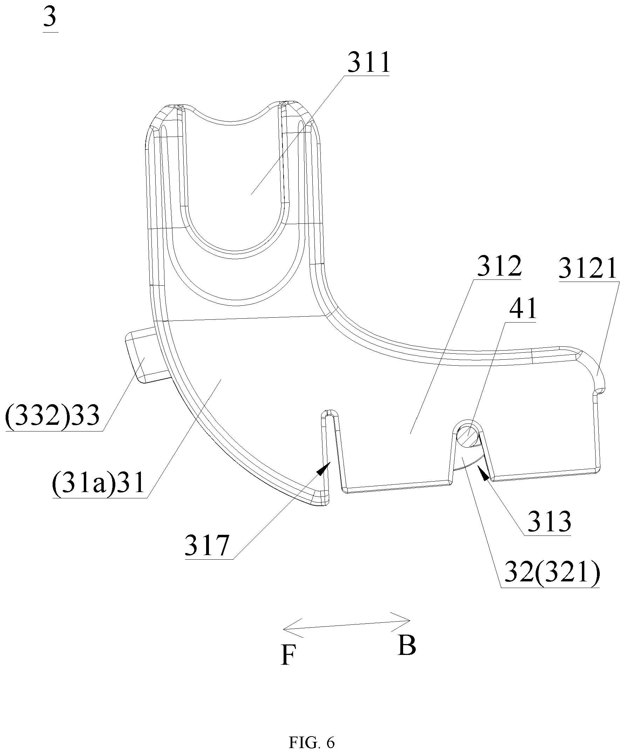

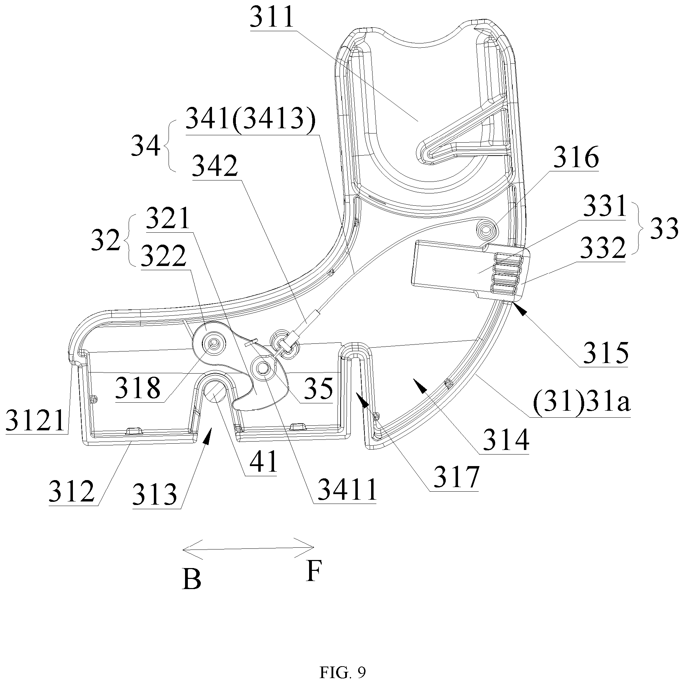

As shown in FIG. 6 to FIG. 9, the adaptor 3 includes a connecting base 31, a locking member 32, an operating member 33, a traction assembly 34, and a reset member 35. The connecting base 31 is substantially L-shaped. The connecting base 31 has a first connecting portion 311 and a second connecting portion 312. The first connecting portion 311 extends upwards substantially along an up-down direction. The second connecting portion 312 extends rearwards substantially along the front-rear direction. Referring to FIG. 1 and FIG. 2 together, the first connecting portion 311 is adapted to be connected to the carrier body 2. Specifically, the first connecting portion 311 is adapted to be detachably connected to a side portion of the carrier body 2. The second connecting portion 312 is adapted to be detachably connected to the frame body 1.

As shown in FIG. 5 to FIG. 7, the second connecting portion 312 of the connecting base 31 is provided with an engaging groove 317, an opening of the engaging groove 317 is downward, and an opening of the receiving groove 425 of the fitting base 42 is upward. The connecting base 31 is in insertion fit with the fitting base 42 substantially in the up-down direction. That is, an insertion direction of the connecting base 31 and the fitting base 42 is substantially perpendicular to a normal traveling direction of the child carrier. In this way, during normal traveling of the child carrier, the separation of the connecting base 31 from the fitting base 42 can be better restricted. In this embodiment, at least part of the second connecting portion 312 is inserted into the receiving groove 425, and the engaging groove 317 is engaged with a side wall of the receiving groove 425. The engaging groove 317 passes through left and right sides of the connecting base 31. That is, the engaging groove 317 extends substantially along the left-right direction, and the engaging groove 317 is engaged with the front side wall 421 of the receiving groove 425. Left and right sides of the second connecting portion 312 are limited respectively by inner walls of the receiving groove 425, so as to restrict movement of the adaptor 3 relative to the fitting assembly 4 in the left-right direction. One end of the second connecting portion 312 away from the first connecting portion 311 has a limiting protrusion 3121. When the second connecting portion 312 is in insertion fit with the receiving groove 425, the limiting protrusion 3121 abuts against an end face of the rear side wall 422 of the receiving groove 425. In this way, the second connecting portion 312 can be inserted into the receiving groove 425 more firmly, reducing relative shaking between the connecting base 31 and the fitting base 42.

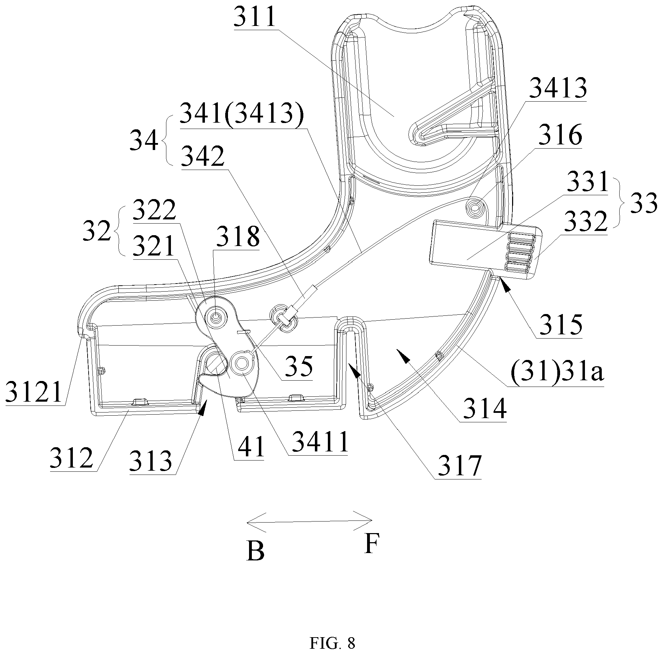

In some embodiments, as shown in FIG. 8 to FIG. 10, the locking member 32 is movably arranged on the connecting base 31. Specifically, the locking member 32 is rotatably arranged on the second connecting portion 312 of the connecting base 31 and has a lock position and an unlock position. When the locking member 32 is at the lock position, the locking member 32 locks the fitting member 41 to connect the adaptor 3 to the frame body 1. The fitting assembly 4 is arranged on the frame body 1, and the adaptor 3 is detachably connected to the carrier body 2. Therefore, through the fit between the adaptor 3 and the fitting member 41 of the fitting assembly 4, the carrier body 2 is fixed to the frame body 1. When the locking member 32 is at the unlock position, the locking member 32 unlocks the fitting member 41 (i.e., the locking member 32 is separated from the fitting member 41, so as to allow the adaptor 3 to be separated from the fitting assembly 4 to allow the adaptor 3 to be separated from the frame body 1, thereby allowing the carrier body 2 to be separated from the frame body 1. In this way, through the adaptor 3 and the adaptor apparatus 30 according to this embodiment, the carrier body 2 can be detachably mounted on the frame body 1 easily.

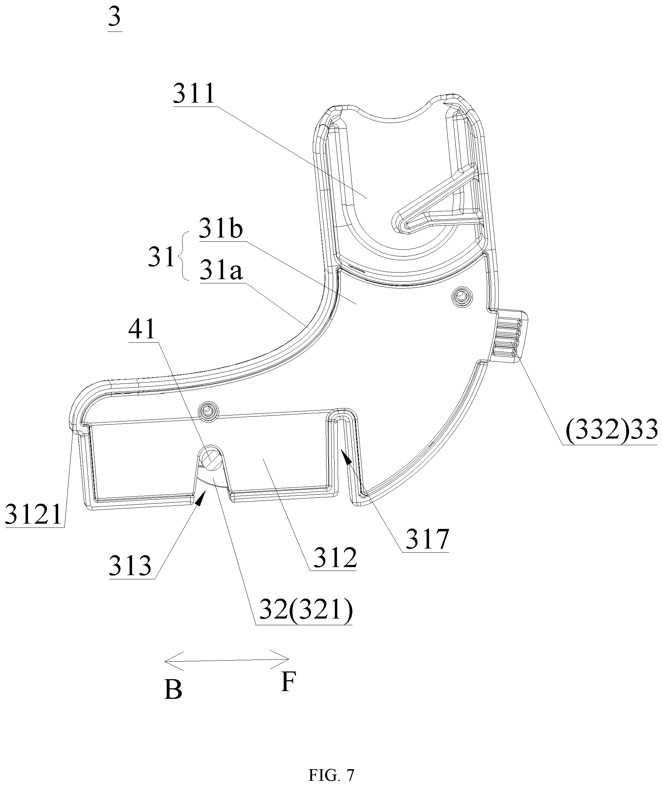

Referring to FIG. 7 to FIG. 9, the connecting base 31 includes a first housing 31a and a second housing 31b, and the second housing 31b is detachably connected to the first housing 31a. The first housing 31a is provided with an accommodating groove 314, and the second housing 31b covers a groove opening of the accommodating groove 314. The locking member 32 is at least partially accommodated in the accommodating groove 314. The locking member 32 has a hook portion 321 and a pivot portion 322. The hook portion 321 is adapted to be engaged with the clamping rod 41, to realize a detachable connection between the adaptor 3 and the fitting assembly 4. The pivot portion 322 is rotatably arranged in the accommodating groove 314. When the locking member 32 is at the lock position, at least part of the hook portion 321 can extend out of the accommodating groove 314 to be engaged with the fitting member 41. When the locking member 32 is at the unlock position, the hook portion 321 retracts into the accommodating groove 314 to be disengaged from the fitting member 41. Specifically, the first housing 31a is provided with a boss portion 318, the boss portion 318 is located in the accommodating groove 314 and is fixedly connected to or integrally formed on a bottom wall of the accommodating groove 314, the pivot portion 322 of the locking member 32 is rotatably arranged on the boss portion 318, and the boss portion 318 limits an axis of rotation of the locking member 32. The axis of rotation extends substantially along the left-right direction. In this embodiment, the second connecting portion 312 is provided with a locking groove 313, and the fitting member 41 (i.e., the clamping rod) is adapted to be engaged in the locking groove 313. A groove opening of the locking groove 313 is downward, the locking groove 313 passes through left and right sides of the connecting base 31, and an extension direction of the locking groove 313 is substantially the same as that of the engaging groove 317. When the locking member 32 is at the lock position, the hook portion 321 at least partially extends into the locking groove 313 and is engaged with the clamping rod, to limit the fitting member 41 in the locking groove 313. At least part of the hook portion 321 is below the clamping rod. Through a joint limiting effect of the hook portion 321 and a groove wall of the locking groove 313 on the clamping rod, the adaptor 3 cannot move relative to the fitting assembly 4 in both the front-rear and up-down directions. Therefore, movement of the carrier body 2 relative to the frame body 1 in the front-rear and up-down directions can be restricted. When the locking member 32 is at the unlock position, the hook portion 321 exits the locking groove 313, thereby allowing the fitting member 41 to be separated from the connecting base 31. Through the fitting between the locking groove 313 and the locking member 32, movement of the fitting member 41 in the up-down direction and the front-rear direction can be restricted, so as to connect the adaptor 3 to the fitting assembly 4 more firmly.

Still referring to FIG. 7 to FIG. 9, the reset member 35 is connected to the locking member 32, and the reset member 35 is adapted to bias the locking member 32 to rotate the locking member 32 towards the lock position, and the operating member 33 is driven by the traction assembly 34 to move from the second position to the first position. In this embodiment, the reset member 35 is, for example, a torsional spring, the reset member 35 is arranged in the accommodating groove 314 and sleeves the boss portion 318, one pin of the reset member 35 (i.e., the torsional spring) abuts against the locking member 32, and the other pin of the reset member 35 (i.e., the torsional spring) abuts against an inner wall of the accommodating groove 314. When the locking member 32 is at the unlock position, the reset member 35 is in an elastic energy storage state, and an elastic restoring force of the reset member 35 causes the locking member 32 to have a tendency to rotate towards the lock position.

In some embodiments, as shown in FIG. 7 to FIG. 9, the operating member 33 is movably arranged on the connecting base 31 and is drivingly connected to the locking member 32 through the traction assembly 34. Specifically, at least part of the operating member 33 is accommodated in the accommodating groove 314. The operating member 33 has a first position and a second position. When the operating member 33 is at the first position, the locking member 32 is at the lock position where engagement with the fitting member 41 can be realized, so as to fixedly connect the connecting base 31 to the fitting assembly 4. When the operating member 33 moves from the first position to the second position under an external force, the operating member 33 drives, through the traction assembly 34, the locking member 32 to move from the lock position to the unlock position. When the operating member 33 moves to the second position, the locking member 32 rotates to the unlock position where disengagement from the fitting member 41 can be realized, so that the connecting base 31 can be separated from the fitting assembly 4 and the reset member 35 is in the elastic energy storage state. When no external force is applied to the operating member 33, the locking member 32 rotates from the unlock position to the lock position under the elastic restoring force of the reset member 35, and the operating member 33 is driven by the traction assembly 34 to move from the second position and return to the first position.

In this embodiment, the operating member 33 is connected to the locking member 32 through the traction assembly 34, and there is no need to tie a position of the operating member 33 to a position of the locking member 32 (that is, the position of the operating member 33 may not be restricted by the structure and the position of the locking member 32), so that the position of the operating member 33 can be set more flexibly, thereby facilitating a user's operation. In this embodiment, the operating member 33 and the locking member 32 are arranged relatively far away from each other. In this way, a length of a rotating arm that rotates the locking member 32 can be adjusted by adjusting a connection position between the traction assembly 34 and the locking member 32, which helps realize a remote operation on the operating member 33 (even if the locking member 32 has a longer rotating arm), so that the user can operate the operating member 33 with less effort. In addition, in this embodiment, through the connection between the traction assembly 34 and the locking member 32, the operating member 33 can reduce their footprint, thereby reducing an overall volume of the adaptor 3.

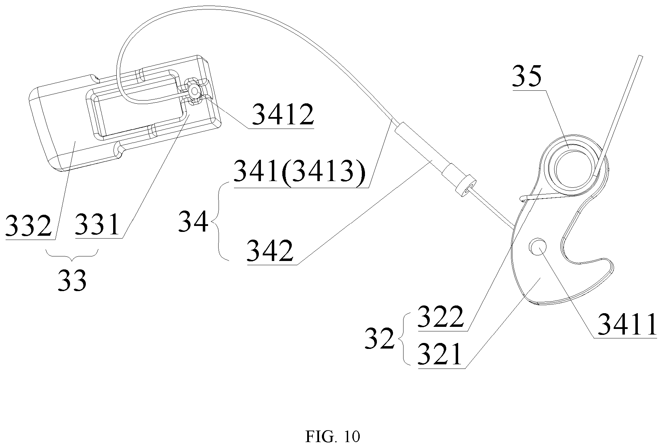

Referring to FIG. 8 to FIG. 9, the traction assembly 34 is accommodated in the accommodating groove 314 and connected between the locking member 32 and the operating member 33. The traction assembly 34 includes a traction member 341 and a sheath 342. One end (i.e., a first end 3411) of the traction member 341 is connected to the locking member 32. Referring to FIG. 10, the other end (i.e., a second end 3412) of the traction member 341 is connected to the operating member 33. The traction member 341 includes a traction rope (such as a steel wire, a steel cable, or a carbon fiber rope) and a first terminal and a second terminal that are respectively provided at two ends of the traction rope. The first terminal serves as the first end 3411, the second terminal serves as the second end 3412, and the traction rope forms a middle part 3413 of the traction member 341. In some other embodiments not illustrated, the traction member 341 may not be provided with the first terminal and/or the second terminal, one end of the traction rope serves as the first end 3411, and/or the other end of the traction rope serves as the second end 3412, which is not limited in the present disclosure. The sheath 342 sleeves the traction member 341. Specifically, the sheath 342 sleeves the traction rope of the traction member 341. The sheath 342 is configured to guide an extension direction of the traction member 341 and prevent entanglement and knotting of the traction member 341 in a loose state. In this embodiment, at least one end of the sheath 342 is connected to the connecting base 31. Certainly, in other embodiments not illustrated, the sheath 342 may alternatively sleeve the traction member 341 and is not connected to the connecting base 31, which is not limited in the present disclosure.

As shown in FIG. 8 to FIG. 10, a side wall of the accommodating groove 314 is provided with an operating port 315, the operating port 315 is substantially located at the first connecting portion 311 of the connecting base 31, and the operating port 315 is in communication with the accommodating groove 314. Specifically, the operating port 315 is located on a side of the first connecting portion 311 away from the limiting protrusion 3121 (i.e., the operating port 315 is located on a front side surface of the first connecting portion 311). The operating member 33 is movably inserted into the operating port 315. The operating member 33 can move substantially in the front-rear direction. In this embodiment, when the operating portion 332 is pressed along the front-rear direction, the operating member 33 moves from the first position to the second position. The operating member 33 has a main body portion 331 and an operating portion 332. The main body portion 331 is accommodated in the accommodating groove 314 and connected to the second end 3412 of the traction member 341. When the operating member 33 is at the first position, at least part of the operating portion 332 extends out of the accommodating groove 314, so that the operating member 33 can be moved by operating the operating portion 332.

As shown in FIG. 8 to FIG. 10, the connecting base 31 is provided with a protruding portion 316, and the protruding portion 316 may be arranged next to the operating member 33, or may be arranged between the operating member 33 and the bottom wall of the accommodating groove 314. The middle part 3413 of the traction member 341 abuts against the protruding portion 316. That is, the middle part 3413 of the traction member 341 detours from the protruding portion 316 to change a movement direction of the traction member 341. In other words, the first end 3411 of the traction member 341 is connected to the locking member 32, and the second end 3412 passes through or passes around the protruding portion 316 and is connected to the main body portion 331 of the operating member 33. In this way, a movement direction of the second end 3412 of the traction member 341 can be changed, so that when the operating member 332 moves towards the locking member 32, the traction member 341 is in a tensioned state, thereby driving the locking member 32 to rotate towards the operating member 33.

In this embodiment, when the operating portion 332 is pressed to move the operating member 33 from the first position to the second position (i.e., the operating member 33 is pressed to move backwards), the operating member 33 moves towards the locking member 32, a distance between the first end 3411 and the second end 3412 decreases, and the traction member 341 is in the tensioned state, thereby driving the locking member 32 to rotate from the lock position to the unlock position. When a pressing force on the operating member 33 is removed (i.e., the operating member 33 is not pressed), the operating member 33 no longer applies an external force to the traction member 341, the locking member 32 rotates from the unlock position to the lock position under the elastic restoring force of the reset member 35, and the operating member 33 is driven by the traction member 341 to move forward from the second position and return to the first position. In this process, the operating member 33 and the locking member 32 are switched to positions away from each other, and the distance between the first end 3411 and the second end 3412 increases.

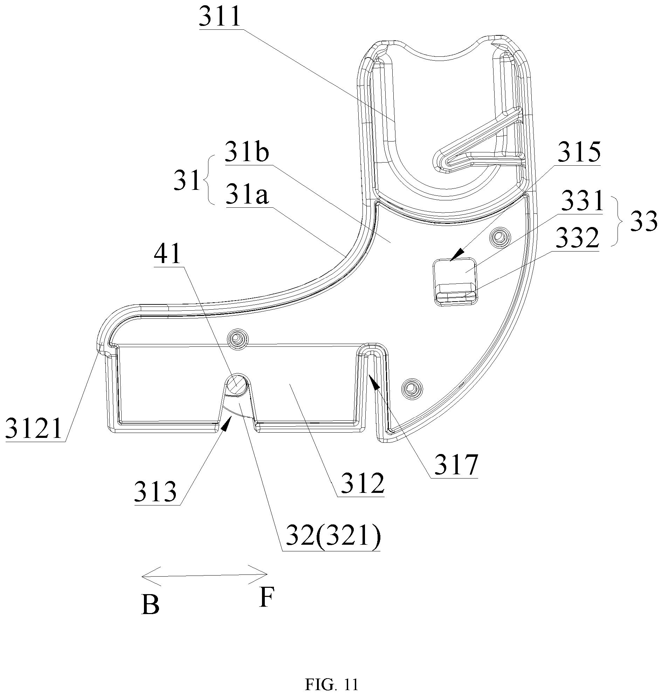

FIG. 11 is a right view of the adaptor 3 according to some other embodiments of the present disclosure. This embodiment has at least the following differences from the above embodiments.

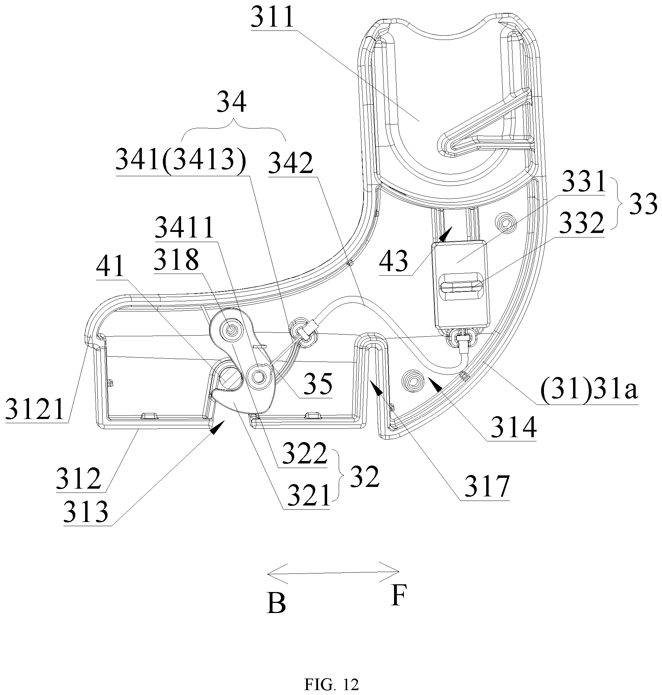

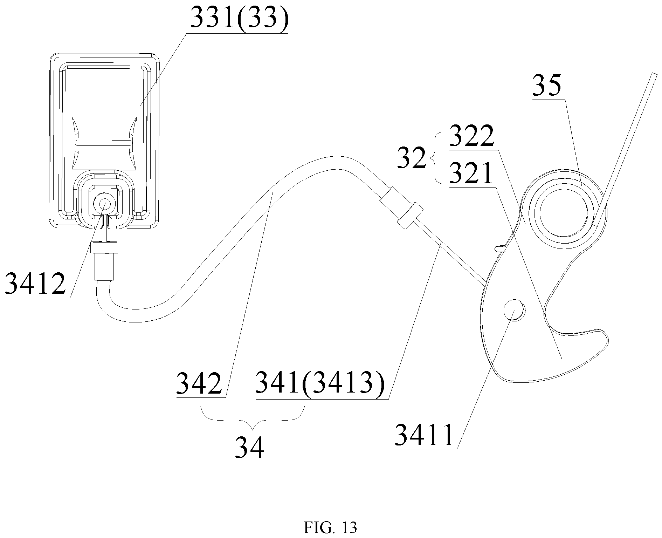

In another embodiment, as shown in FIG. 11 to FIG. 13, the operating port 315 is arranged on the second housing 3 1b, and the operating port 315 is in communication with the accommodating groove 314. The operating member 33 includes a main body portion 331 and an operating portion 332. The main body portion 331 is movably arranged in the accommodating groove 314. The bottom wall of the accommodating groove 314 is provided with a guide groove 43. The main body portion 331 is slidably connected to the guide groove 43. The operating member 33 at least partially extends out of the accommodating groove 314 through the operating port 315, so that the operating portion 332 is operated to move the operating member 33 between the first position and the second position. In this embodiment, the operating member 33 moves substantially in the up-down direction.

In this embodiment, when the operating portion 332 of the operating member 33 is pulled upwards in the up-down direction, the operating member 33 moves from the first position to the second position, and the traction member 341 is in the tensioned state, thereby driving the locking member 32 to rotate from the lock position to the unlock position. When the operating member 33 is no longer pulled, the operating member 33 no longer applies an external force to the traction member 341, the locking member 32 rotates from the unlock position to the lock position under the elastic restoring force of the reset member 35, and the operating member 33 is driven by the traction member 341 to move downwards from the second position and return to the first position.

The technical features in the above embodiments may be randomly combined. For concise description, not all possible combinations of the technical features in the above embodiments are described. However, all the combinations of the technical features are to be considered as falling within the scope described in this specification provided that they do not conflict with each other.

The above embodiments only describe several implementations of the present disclosure, and their description is specific and detailed, but cannot therefore be understood as a limitation on the patent scope of the present disclosure. It should be noted that those of ordinary skill in the art may further make variations and improvements without departing from the conception of the present disclosure.

## Claims

1. An adaptor (3) for a child carrier including a carrier body (2) and a frame body (1), the adaptor (3) comprising:
a connecting base (31) having a first connecting portion (311) and a second connecting portion (312), the first connecting portion (311) being adapted to be connected to the carrier body (2);
a locking member (32) movably arranged on the second connecting portion (312) of the connecting base (31) and having a lock position and an unlock position, wherein, when the locking member (32) is at the lock position, the locking member (32) being configured to lock a fitting member (41) arranged on the frame body (1) to connect the adaptor (3) to the frame body (1), and when the locking member (32) is at the unlock position, the locking member (32) being configured to unlock the fitting member (41) to allow the adaptor (3) to be separated from the frame body (1);
an operating member (33) movably arranged on the connecting base (31); and
a traction assembly (34) connected to the locking member (32) and the operating member (33) respectively;
wherein the operating member (33) is operable to drive the traction assembly (34) to drive the locking member (32) to move from the lock position to the unlock position.

2. The adaptor (3) of claim 1, wherein the fitting member (41) is a clamping rod, and the locking member (32) is rotatably arranged on the second connecting portion (312) and has a hook portion (321) configured to be engaged with the fitting member (41).

3. The adaptor (3) of claim 1 or 2, wherein the second connecting portion (312) is provided with an engaging groove (317) configured to be engaged with a side wall of a fitting base (42) arranged on the frame body (1).

4. The adaptor (3) of any one of claims 1 to 3, wherein:
the second connecting portion (312) is provided with a locking groove (313); and
when the locking member (32) is at the lock position, the locking member (32) at least partially extends into the locking groove (313) and locks the fitting member (41), so as to limit the fitting member (41) within the locking groove (313), and when the locking member (32) is at the unlock position, the locking member (32) exits the locking groove (313), thereby allowing the fitting member (41) to be separated from the connecting base (31).

5. The adaptor (3) of any one of claims 1 to 4, further comprising a reset member (35), the reset member (35) being connected to the locking member (32), and the reset member (35) being adapted to bias the locking member (32) to move the locking member (32) towards the lock position.

6. The adaptor (3) of any one of claims 1 to 5, wherein the traction assembly (34) comprises:
a traction member (341) having an end connected to the locking member (32), and another end connected to the operating member (33); and
a sheath (342) sleeving the traction member (341).

7. The adaptor (3) of claim 2, optionally in combination with any one of the claims 3 to 6, wherein:
the connecting base (31) comprises a first housing (31a) and a second housing (31b), the first housing (31a) being provided with an accommodating groove (314), the second housing (31b) covering a groove opening of the accommodating groove (314), wherein at least part of the operating member (33) is accommodated in the accommodating groove (314), and the traction assembly (34) is accommodated in the accommodating groove (314); and
the locking member (32) has a pivot portion (322), the pivot portion (322) being rotatably arranged in the accommodating groove (314), and when the locking member (32) is at the lock position, at least part of the hook portion (321) is capable of extending out of the accommodating groove (314).

8. The adaptor (3) of claim 7, wherein:
a side wall of the accommodating groove (314) is provided with an operating port (315), the operating port (315) being in communication with the accommodating groove (314), and the operating member (33) is movably inserted into the operating port (315) and has a first position and a second position; and
the operating member (33) has an operating portion (332), and when the operating member (33) is at the first position, at least part of the operating portion (332) extends out of the accommodating groove (314).

9. The adaptor (3) of claim 7 or 8, wherein:
the second housing (31b) is provided with an operating port (315), the operating port (315) being in communication with the accommodating groove (314); and
the operating member (33) comprises a main body portion (331) and an operating portion (332), the main body portion (331) being movably arranged in the accommodating groove (314), and the operating member (33) at least partially extends out of the accommodating groove (314) through the operating port (315).

10. The adaptor (3) of any one of claims 1 to 9, wherein:
the traction assembly (34) comprises a traction member (341), wherein the traction member (341) comprising a first end (3411), a second end (3412), and a middle part (3413) between the first end (3411) and the second end (3412), the first end (3411) being connected to the locking member (32), and the second end (3412) being connected to the operating member (33);
the connecting base (31) is provided with a protruding portion (316), and the middle part (3413) abuts against the protruding portion (316); and
the operating member (33) is movably arranged on the connecting base (31), and when the operating member (33) moves from the first position to the second position, a distance between the first end (3411) and the second end (3412) decreases.

11. An adaptor apparatus (30), comprising:
the adaptor (3) of any one of claims 1 to 10; and
a fitting assembly (4) configured to be connected to a frame body (1) of a child carrier, the fitting assembly (4) comprising a fitting base (42) and a fitting member (41) arranged on the fitting base (42), the fitting assembly (4) having a receiving groove (425) and being provided with the fitting member (41),
wherein the connecting base (31) of the adaptor (3) is adapted to be at least partially inserted into the receiving groove (425), and the locking member (32) is adapted to selectively lock the fitting member (41).

12. The adaptor apparatus (30) of claim 11, wherein the fitting member (41) is a clamping rod, two ends of the clamping rod being connected to a pair of side walls of the receiving groove (425) respectively.

13. The adaptor apparatus (30) of claim 11 or 12, wherein the second connecting portion (312) of the connecting base (31) is provided with an engaging groove (317), and at least part of the second connecting portion (312) is inserted into the receiving groove (425), the engaging groove (317) being engaged with a side wall of the receiving groove (425).

14. A child carrier, comprising:
a frame body (1);
a carrier body (2); and
the adaptor apparatus (30) of any one of claims 11 to 13,
wherein the fitting assembly (4) of the adaptor apparatus (30) is connected to the frame body (1), and the adaptor (3) of the adaptor apparatus (30) is detachably connected to the fitting assembly (4) and the carrier body (2).

15. The child carrier of claim 14, wherein:
the frame body (1) comprises a wheel frame (11) and a seat frame (12) connected to the wheel frame (11); and
two adaptor apparatuses (30) are provided, and each fitting assembly (4) is connected to the wheel frame (11) and the seat frame (12) respectively.
